# EUROPEAN PATENT APPLICATION

(11) **EP 4 799 863 A1**
(43) Date of publication of application: **02.09.2026**
(21) Application number: 26157483.4
(22) Date of filing: 10.02.2026
(51) Int. Cl.: B60Q 1/00, F21S 41/151, F21S 41/153, F21S 41/24, F21S 41/25, F21S 41/26, F21S 41/265, F21S 41/27, F21S 41/20, F21S 41/32, F21S 41/43, F21S 41/40

(54) **VEHICLE HEADLAMP**

(30) Priority: 26.02.2025 KR 20250025200
(71) Applicant: SL Corporation, Daegu 41514 (KR)
(72) Inventor: Ha, Jae Seok, 38470 Gyeongsan-si, Gyeongsangbuk-do (KR); Lee, Jae Young, 38470 Gyeongsan-si, Gyeongsangbuk-do (KR)
(74) Representative: BCKIP Part mbB

(57) **Abstract**

A vehicle lamp (1) is configured such that one or more beam patterns (P1,P2,P3) are formed by a light-emitting unit (10) including at least one lamp module (1000,2000). The light-emitting unit (10) includes a first lamp module (1000), which includes: a first light source unit (1100) that generates light; and a first lens unit (1200) configured to form at least one of a first beam pattern (P1) or a second beam pattern (P2) by the light emitted from the first light source unit (1100). The first lens unit (1100) includes: a first incidence portion (1210) on which light emitted from the first light source unit is incident; and a first emission portion (1220) through which the light incident on the first incidence portion (1210) is emitted, and a transmission portion (1230) through which the light incident on the first incident portion (1210) is transmitted toward the first emission portion (1220).

## Description

### CROSS-REFERENCE TO RELATED APPLICATION

This application claims priority from Korean Patent Application No. 10-2025-0025200 filed on February 26, 2025.

### TECHNICAL FIELD

The present invention relates to a vehicle lamp, and more particularly, to a vehicle lamp capable of forming various beam patterns while reducing an installation space.

### BACKGROUND

In general, various types of lamps having both an illumination function for more easily checking objects located around a vehicle during low-light conditions (e.g., night-time driving) and a signaling function for informing surrounding vehicles or pedestrians of a driving state of the vehicle are provided in a vehicle.

For example, a head lamp and a fog lamp are mainly intended for the illumination function, and a turn signal lamp, a tail lamp, and a brake lamp are mainly intended for the signaling function. The installation standards and specifications thereof are prescribed by regulations so that each lamp can properly perform its function.

In order to form a plurality of different beam patterns by such vehicle lamps, an optical system corresponding to each beam pattern must be separately provided, resulting in an increase in the number of components and therefore an increase in installation space as well as cost.

Accordingly, there is a demand for an approach that enables the formation of various beam patterns while reducing the installation space required for forming the beam patterns.

### SUMMARY OF THE INVENTION

An object of the present invention is to provide a vehicle lamp in which components for forming a plurality of different beam patterns are commonly used, thereby reducing the number of components and thus reducing installation space and cost.

The objects of the present invention are not limited to those mentioned above, and other objects not explicitly stated will be clearly understood by those skilled in the art based on the following description.

According to an aspect of the present invention, a vehicle lamp may be configured such that one or more beam patterns are formed by a light-emitting unit including at least one lamp module. The light-emitting unit may include a first lamp module, which includes: a first light source unit that generates light; and a first lens unit configured to form at least one of a first beam pattern or a second beam pattern by the light emitted from the first light source unit. The first lens unit may include a first incidence portion on which the light emitted from the first light source unit is incident; and a first emission portion through which at least a portion of the light incident on the first incidence portion is emitted; and a transmission portion through which the light incident on the first incident portion is transmitted toward the first emission portion.

The first lens unit may be configured to receive the light emitted from the first light source and emit the light such that the light forms one or more beam patterns, e.g., when projected towards a surface, such as a road surface or a vertically extending surface.

The first incidence portion may receive the light emitted from the first light source and may, for example, be arranged opposite to the light source, i.e., opposite to the light source in a direction of an optical axis of the light source.

The transmission portion may be configured to transmit or pass light. According to some embodiments, the transmission portion may extend in a longitudinal direction, which may, in the following also be referred to as a front-rear direction or Y-axis direction. The first incidence portion and the first emission portion may be arranged at opposite end portions of the transmission portion. For example, the first incidence portion may be arranged at a first or rear end of the transmission portion, and the first emission portion may be arranged on a second of front end of the transmission portion.

Generally, herein, a longitudinal direction (Y-axis direction) may correspond to a front-rear-direction when the vehicle lamp is installed in a vehicle. A vertical direction (Z-axis direction), which extends transverse to the longitudinal direction, may correspond to the direction of gravity when the vehicle lamp is installed in a vehicle. A lateral direction (X-axis direction) extends transverse to the longitudinal direction and the vertical direction and, when the vehicle lamp is installed in a vehicle, may correspond to a left-right direction.

The first light source unit may include one or more of the following: at least one first or upper light source that emits light for forming the first beam pattern; and at least one second or lower light source that emits light for forming the second beam pattern.

According to some embodiments, the first incidence portion may include at least one first upper incidence module on which the light emitted from the at least one first or upper light source is incident. Additionally, or alternatively, the first incidence portion may include at least one lower incidence module on which the light emitted from the at least one lower light source is incident.

The light incident on the at least one first or upper incidence module may be guided to proceed to the first emission portion through the transmission portion.

The light incident on the at least one second or lower incidence module may be guided to proceed to the first emission portion through a transmitting surface formed on a lower surface of the transmission portion and a re-incidence surface formed in front of the transmitting surface to be spaced apart from the transmitting surface. The transmitting surface may extend transverse to the longitudinal direction, e.g., it may extend along a third or vertical direction, which is also referred to herein as a Z-axis direction. Similar, the re-incidence surface may extend transverse to the longitudinal direction, e.g., along the third direction. The transmitting surface and the re-incidence surface may be oriented to face each other.

The transmission portion may include a shield portion formed on the lower surface of the transmission portion with a front end thereof disposed at a rear focus of the first emission portion. The front end of the shield portion may face towards the first emission portion. A rear end of the shield portion may face towards the first incidence portion. The lower surface of the transmission portion may extend in the longitudinal direction and, therefore, may also be referred to as a first longitudinal surface. With respect to the vertical direction, the first longitudinal surface may form a lower surface of the transmission portion. Optionally, the lower surface may be planar or substantially planar.

The transmitting surface may be formed to be connected to a rear end of the shield portion, and the re-incidence surface may be formed to be connected to the front end of the shield portion.

The transmitting surface may be formed to have a convexly curved surface shape, in particular, toward the front. Additionally or alternatively, the re-incidence surface may be formed to have a convexly curved surface shape, particularly toward the rear.

The transmission portion may include a recess formed on an upper surface thereof, and the recess may be configured to obstruct light from proceeding through the upper surface of the transmission portion. The upper surface of the transmission portion may extend in the longitudinal direction and be oriented opposite to the lower surface of the transmission portion. Thus, the upper surface of the transmission portion may also be referred to as a second longitudinal surface of the transmission portion.

The first emission portion may include an emission region through which light for forming a third beam pattern is emitted among the light incident on the first incidence portion.

The light-emitting unit may further include a second lamp module disposed on at least one of both sides of the first lamp module, for example, with respect to a left-right direction or lateral direction (also referred to as an X-axis direction).

The first lamp module and the second lamp module may form pattern regions having different light distribution characteristics. Light distribution characteristics may include, for example, brightness, an area, a range, and/or a shape of the respective pattern region. light distribution. For example, a light distribution pattern may include at least one of a low-beam pattern, a high-beam pattern, and a road surface pattern, and may define an area, a range, and/or a shape of light distribution.

According to some embodiments, at least one of the first beam pattern or the second beam pattern may be formed by synthesizing pattern regions respectively formed by the first lamp module and the second lamp module.

According to one aspect of the invention, a second lamp module for a vehicle lamp is provided. The second lamp module, for example, may be employed in the vehicle lamp describe above, either alone or in combination with the first lamp module.

The second lamp module may include one or more of the following: a second light source unit that generates light; and a second lens unit configured to form a beam pattern, e.g., at least one of the first beam pattern or the second beam pattern, by the light emitted from the second light source unit.

According to some embodiments, the second lens unit may include a second incidence portion on which the light emitted from the second light source unit is incident.

According to some embodiments, the second lens unit may include a second emission portion through which at least a portion of the light incident on the second incidence portion is emitted.

The second lens unit may be configured to receive the light emitted from the second light source and emit the light such that the light forms one or more beam patterns, e.g., when projected towards a surface, such as a road surface or a vertically extending surface.

The second incidence portion may receive the light emitted from the second light source and may, for example, be arranged opposite to the light source, i.e., opposite to the light source in a direction of an optical axis of the light source.

The transmission portion may be configured to transmit or pass light. According to some embodiments, the transmission portion may extend in a longitudinal direction, which may, in the following also be referred to as a front-rear direction or Y-axis direction. The second incidence portion and the second emission portion may be arranged at opposite end portions of the transmission portion. For example, the second incidence portion may be arranged at a second or rear end of the transmission portion, and the second emission portion may be arranged on a second of front end of the transmission portion.

The second light source unit may include at least one first or upper light source that emits light for forming the first beam pattern; and at least one second or lower light source that emits light for forming the second beam pattern. The second incidence portion may include at least one first upper incidence module on which the light emitted from the at least one first or upper light source is incident; and at least one second or lower incidence module on which the light emitted from the at least one second or lower light source is incident.

The second emission portion may include at least one of a first or upper emission portion and a second or lower emission portion. Optionally, the second or lower emission portion may be disposed more forward than the upper emission portion. That is, the second emission portion may be spaced to the first emission portion in the longitudinal direction such that the second emission portion is spaced further apart from the first light source of the second light source unit than the first emission portion. If the second lamp module is employed in combination with a first lamp module as described above, the second emission portion may disposed spaced apart from the first emission portion in a direction towards first emission portion of the first lens unit.

The upper emission portion may be disposed behind the first emission portion of the first lens unit. That is, the upper emission portion, with respect to the longitudinal direction, the upper emission portion may be spaced apart from the first emission portion of the first lens unit, particularly, in a direction from the first emission portion of the first lens unit towards the first light source unit or the second light source unit.

Light emitted through the first or upper emission portion of the second lens unit may be collected at an edge portion formed at an upper end of the first or lower emission portion of the second lens unit. For example, the first beam pattern may thereby be formed. The edge portion, with respect to the vertical or Z-axis direction, may be formed an upper end of the lower emission portion. For example, the lower emission portion may extend in the vertical direction between a lower end and an upper end, wherein, with respect to the vertical direction, the upper end is positioned adjacent to the upper emission portion, and the lower end is positioned facing away from the upper emission portion.

According to an embodiment, light emitted through the lower emission portion may form the second beam pattern.

According to some embodiments, the edge portion may may be disposed at a position that corresponds to a rear focus of the first emission portion of the first lens unit. That is, with respect to the longitudinal direction, the edge portion may be positioned at or in the region of the rear focus of the first emission portion of the first lens unit.

The lower emission portion may be formed at a front end of a light guide portion that extends forward from the second incidence portion. Generally, the second lens unit may include a light guide portion extending in a longitudinal direction, e.g., in the Y-axis direction. For example, the light guide portion may have a first longitudinal surface and a second longitudinal surface oriented opposite to the first longitudinal surface in the vertical direction, i.e., the Z-axis direction. The first and second longitudinal surfaces may be planar, for example.

Preferably, the second incidence portion of the second lens unit may be formed or disposed on a first or rear end of the light guide portion, and the second or lower emission portion of the second lens unit may be formed on a second or front end of the light guide portion lying opposite to the first end.

According to some embodiments, the light guide portion may have a lower surface formed to be inclined upward toward the front such that its vertical thickness becomes smaller toward the front. The lower surface may, for example, be formed by the first longitudinal surface of the light guide portion. Optionally, the second longitudinal surface of the light guide portion may extend parallel to the longitudinal direction, that is, perpendicular to the vertical direction. The first longitudinal surface may be inclined relative to the second longitudinal surface such that a vertical thickness of the light guide portion, measured in the vertical direction between the first and second longitudinal surfaces of the light guide portion, becomes smaller toward the second emission portion.

The first or upper emission portion may be formed to have a convexly curved surface shape, i.e., toward the front.

The vehicle lamp may further include an optical unit disposed in front of the light-emitting unit, and the optical unit may include at least one optical lens corresponding to the at least one lamp module. The optical unit may be placed in front of the light-emitting unit with respect to the longitudinal or Y-axis direction, i.e., on a light emitting side of the light-emitting unit. In other words, the optical unit may be disposed opposite to the light-emitting unit to receive light emitted by the light-emitting unit.

The at least one lamp module may include a plurality of lamp modules, and the at least one optical lens may include a plurality of optical lenses respectively corresponding to the plurality of lamp modules. Optionally, steps may be formed between incidence surfaces of adjacent ones of the plurality of optical lenses, e.g., in a front-rear direction (longitudinal or Y-axis direction). Emission surfaces of the plurality of optical lenses may form a single, substantially continuous surface.

According to embodiments of the present invention, the following effects may be achieved.

Since a lens unit for forming a plurality of different beam patterns can be commonly used, the number of components can be reduced, so that installation space and cost can be reduced.

It should be noted that the effects of the present invention are not limited to those described above, and other effects of the present invention will be apparent from the following description.

### BRIEF DESCRIPTION OF THE DRAWINGS

The above and other aspects and features of the present invention will become more apparent by describing exemplary embodiments thereof in detail with reference to the attached drawings, in which:
FIGS. 1 to 3 are perspective views illustrating a vehicle lamp according to an embodiment of the present invention;
FIG. 4 is a plan view illustrating the vehicle lamp according to an embodiment of the present invention;
FIG. 5 is a cross-sectional view taken along line A-A' of FIG. 4.
FIG. 6 is a schematic view illustrating a first beam pattern formed by the vehicle lamp according to an embodiment of the present invention;
FIG. 7 is a schematic view illustrating a second beam pattern formed by the vehicle lamp according to an embodiment of the present invention;
FIG. 8 is a schematic view illustrating an optical path of the vehicle lamp according to an embodiment of the present invention;
FIG. 9 is a schematic view illustrating an optical path formed by an emission region according to an embodiment of the present invention;
FIG. 10 is a schematic view illustrating a third beam pattern according to an embodiment of the present invention;
FIG. 11 is a schematic view illustrating an optical path formed by a recess according to an embodiment of the present invention;
FIGS. 12 to 14 are perspective views illustrating a vehicle lamp according to another embodiment of the present invention;
FIG. 15 is a plan view illustrating the vehicle lamp according to another embodiment of the present invention;
FIG. 16 is a cross-sectional view taken along line B-B' of FIG. 15; and
FIG. 17 is a schematic view illustrating an optical path of the vehicle lamp according to another embodiment of the present invention.

### DETAILED DESCRIPTION OF EXEMPLARY EMBODIMENTS

Advantages and features of the present invention and methods of accomplishing the same may be understood more readily by referring to the following detailed description of exemplary embodiments and the accompanying drawings. The present invention may, however, be embodied in many different forms and should not be construed as being limited to the embodiments set forth herein. Rather, these embodiments are provided so that this invention will be thorough and complete and will fully convey the concept of the invention to those skilled in the art, and the present invention will only be defined by the appended claims. Throughout the specification, like reference numerals in the drawings denote like elements.

In some embodiments, well-known steps, structures and techniques will not be described in detail to avoid obscuring the invention.

The terminologies used herein are for the purpose of describing particular embodiments only and are not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Embodiments of the invention are described herein with reference to plan and cross-section illustrations that are schematic illustrations of idealized embodiments of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing. In the drawings, respective components may be enlarged or reduced in size for convenience of explanation.

Hereinafter, the present invention will be described with reference to the accompanying drawings for explaining vehicle lamps according to embodiments of the present invention.

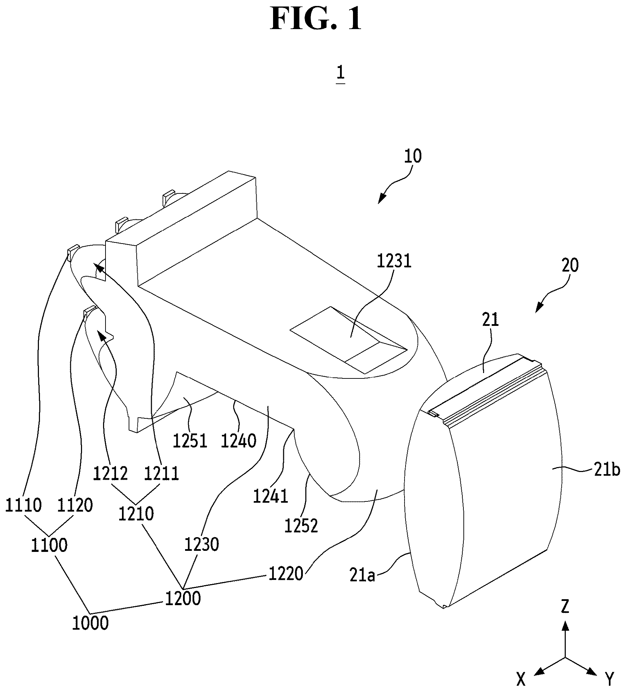

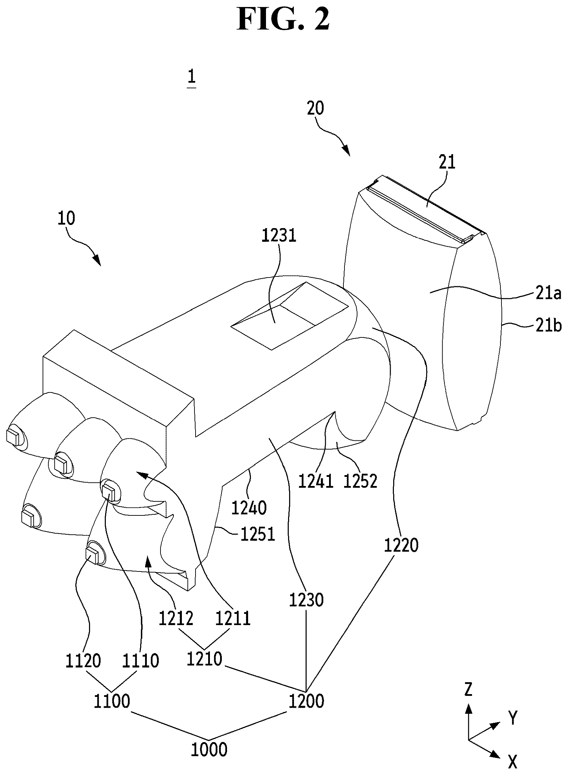

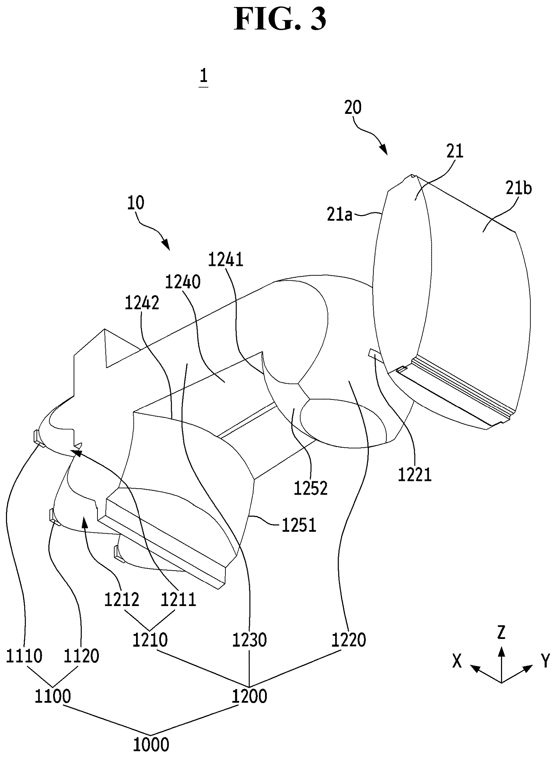

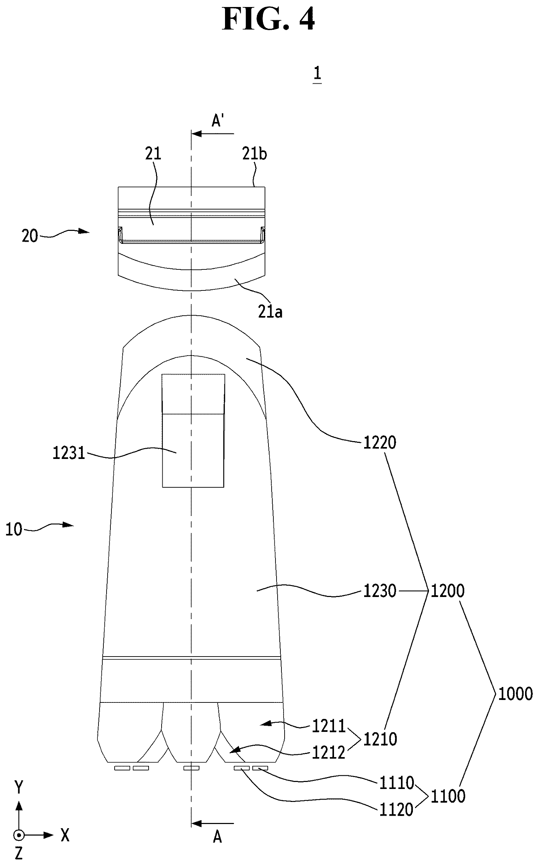

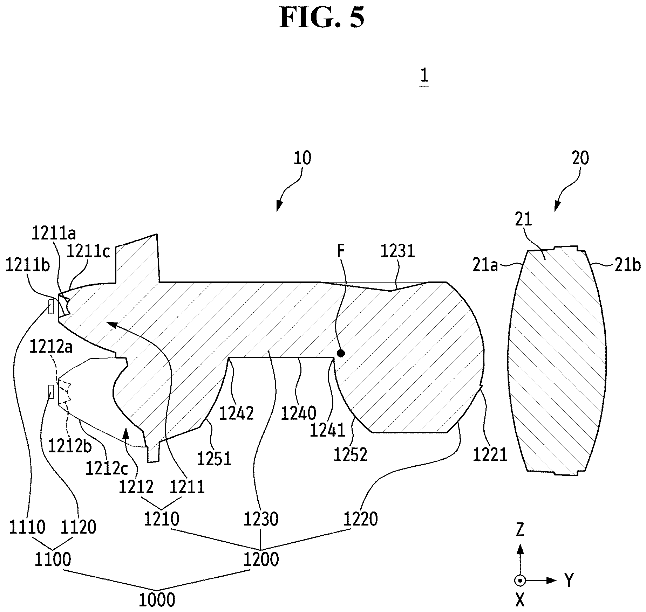

FIGS. 1 to 3 are perspective views illustrating a vehicle lamp according to an embodiment of the present invention, FIG. 4 is a plan view illustrating the vehicle lamp according to an embodiment of the present invention, and FIG. 5 is a cross-sectional view taken along line A-A' of FIG. 4.

Referring to FIGS. 1 to 5, a vehicle lamp 1 according to an embodiment of the present invention may include a light-emitting unit 10 and, optionally, an optical unit 20.

In this embodiment, the vehicle lamp 1 is described, by way of example, as a head lamp that emits light in a forward direction of the vehicle to secure a forward field of view of the vehicle when the vehicle is operated in low-light conditions such as at night or in a tunnel. However, the present invention is not limited thereto, and the vehicle lamp 1 may be used not only as a head lamp but also as various lamps installed in a vehicle, such as a tail lamp, a brake lamp, a daytime running lamp, a turn signal lamp, a fog lamp, a backup lamp, and a position lamp. The vehicle lamp 1 may be used for any one of the various uses described above, or may be used for two or more uses together.

In the following, the X-axis may represent a lateral direction that may correspond to the width direction or left-right direction of a vehicle when the lamp 1 is installed in the vehicle, the Y-axis may represent a longitudinal direction that may correspond to a proceeding direction (forward or backward direction or front-rear direction) of the vehicle when the lamp 1 is installed in the vehicle, and the Z-axis may represent a vertical direction that may correspond to the height direction or an up-down direction of the vehicle when the lamp 1 is installed in the vehicle. However, the present invention is not limited thereto, and the directions represented by the X-axis, Y-axis, and Z-axis may vary depending on the position and/or orientation in which the vehicle lamp 1 is installed. Generally, the vertical direction extends transverse to the longitudinal direction, and the lateral direction extends transverse to the longitudinal direction and the vertical direction. Therefore, unless defined otherwise, terms like "lower", "upper", "above", "below", "downwards", "upward", etc. are to be understood as with respect to the vertical direction (Z-axis), and terms like "front", "rear", "in front of", "behind", etc. are to be understood with respect to the longitudinal direction (Y-axis).

When the vehicle lamp 1 is used as a head lamp, it may form at least one of a low beam pattern or a high beam pattern. The low beam pattern is obtained by emitting light below a cut-off line so that glare is not caused to a driver of a preceding vehicle, an oncoming vehicle, or another vehicle in front, and a wide field of view is secured for a near-forward region of the vehicle. The high beam pattern is for securing a long viewing distance for a far-forward region of the vehicle. When the high beam pattern is formed, the low beam pattern may be formed together so that both a wide field of view and a long viewing distance are secured for the front of the vehicle.

The light-emitting unit 10 may include at least one lamp module 1000 that emits light for forming one or more beam patterns. In this embodiment, the light-emitting unit 10 is described, by way of example, as including a single lamp module 1000 (hereinafter, referred to as a first lamp module). However, the present invention is not limited thereto, and the number and positions of lamp modules included in the light-emitting unit 10 may vary depending on the light distribution characteristics of a beam pattern to be formed by the vehicle lamp 1, i.e., the position, size, shape, brightness, and the like of a region to which light is to be emitted.

The first lamp module 1000 may include a first light source unit 1100 and a first lens unit 1200. The first light source unit 1100 may include at least one first or upper light source 1110 that emits light for forming a first beam pattern, and at least one second or lower light source 1120 that emits light for forming a second beam pattern.

In this embodiment, the first light source unit 1100 is described, by way of example, as including a plurality of upper light sources 1110 arranged in the lateral direction (left-right direction), and a plurality of lower light sources 1120 arranged in the lateral direction (left-right direction). However, the present invention is not limited thereto, and the numbers and arrangement directions of the upper light sources 1110 and the lower light sources 1120 may vary depending on the light distribution characteristics of a beam pattern to be formed by the vehicle lamp 1. For example, only the plurality of upper light sources 1110 or only the plurality of lower light sources 1120 may be provided.

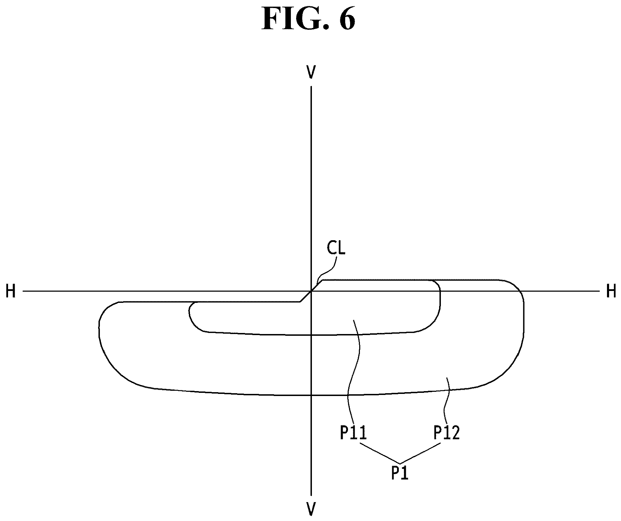

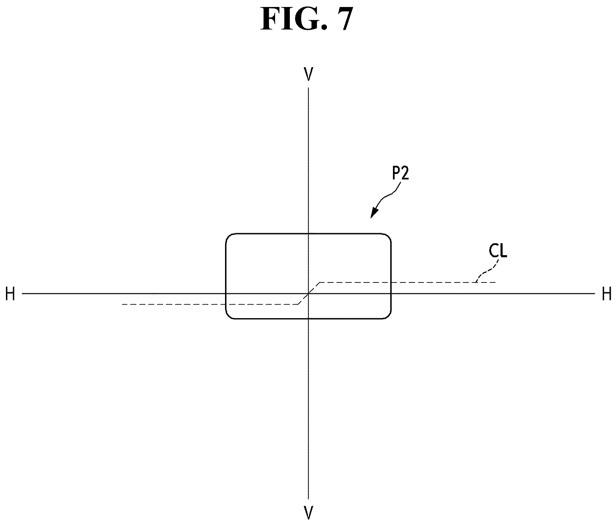

Also, in this embodiment, the first beam pattern is described, by way of example, as a low beam pattern P1 in which light is emitted below a cut-off line CL having a predetermined shape so that a wider field of view is secured for a near-forward region of the vehicle, as illustrated in FIG. 6, and the second beam pattern is described, by way of example, as a high beam pattern P2 at least a portion of which is disposed above the cut-off line CL so that a longer viewing distance is secured for a far-forward region of the vehicle, as illustrated in FIG. 7.

For example, the low beam pattern P1 may include a high intensity region P11 that forms a central portion of the cut-off line CL and has a relatively high luminous intensity in order to improve viewing distance, and a spread region P12 that has a lower luminous intensity than the high intensity region P11 and is formed by expanding the high intensity region P11 in at least one of the left-right direction or the up-down direction to improve the field of view.

Similar to the low beam pattern P1, the high beam pattern P2 may also include a high intensity region and a spread region, and the positions, sizes, shapes, brightnesses, and the like of the high intensity region and spread region of the high beam pattern P2 may vary according to required light distribution characteristics.

The first lens unit 1200 may include a first incidence portion 1210, a transmission portion 1230, and a first emission portion 1220, and at least a portion of the light incident on the first incidence portion 1210 may be transmitted to the first emission portion 1220 by the transmission portion 1230.

The first incidence portion 1210 may include at least one first or upper incidence module 1211 on which the light emitted from the at least one upper light source 1110 is incident. Additionally or alternatively, the first incidence portion 1210 may include at least one lower incidence module 1212 on which the light emitted from the at least one lower light source 1120 is incident.

The at least one upper incidence module 1211 may include at least one of a central surface 1211a, a protruding surface 1211b that protrudes, with respect to the longitudinal direction (Y-axis), rearward, e.g., from an edge of the central surface 1211a toward the at least one upper light source 1110, and a reflecting surface 1211c that reflects the light incident on the protruding surface 1211b to proceed forward. The path of the light incident on the at least one upper incidence module 1211 may be determined by the curvatures and formation angles of the central surface 1211a, the protruding surface 1211b, and the reflecting surface 1211c. For example, the central surface 1211a may have a convex curvature. The protruding surface 1211b may, for example, surround the central surface 1211a. Optionally, the protruding surface 1211b may define a conus, as exemplarily shown in FIG. 5. The reflecting surface 1211c may, for example, have a convex curvature.

Similar to the at least one upper incidence module 1211, the at least one lower incidence module 1212 may include at least one of a central surface 1212a, a protruding surface 1212b that protrudes, with respect to the longitudinal direction (Y-axis), rearward, e.g., from an edge of the central surface 1212a toward the at least one lower light source 1120, and a reflecting surface 1212c that reflects light incident on the protruding surface 1212b to proceed forward. The path of the light incident on the at least one lower incidence module 1212 may be determined by the curvatures and formation angles of the central surface 1212a, the protruding surface 1212b, and the reflecting surface 1212c. For example, the central surface 1212a may have a convex curvature. The protruding surface 1212b may, for example, surround the central surface 1212a. Optionally, the protruding surface 1212b may define a conus, as exemplarily shown in FIG. 5. The reflecting surface 1212c may, for example, have a convex curvature.

The at least one upper incidence module 1211 and the at least one lower incidence module 1212 may be understood as being of a total internal reflection (TIR) lens type for implementing a relatively high degree of light collection.

The first emission portion 1220 may be disposed in front of, i.e., opposite to, the first incidence portion 1210 in the longitudinal direction, so that the light incident on the first incidence portion 1210 is emitted through the first emission portion 1220. For example, the first incident portion 1220 may be formed to have a convexly curved surface shape toward the front in order to collect (e.g., concentrate) the emitted light.

The transmission portion 1230 may extend in the longitudinal direction between a first or rear end and a front or second end. For example, the transmission portion 1230 may have a first longitudinal surface and a second longitudinal surface being oriented opposite to each other in the vertical direction (Z-axis). The first longitudinal surface, with respect to the vertical direction, may form a lower surface, and the second longitudinal surface may define an upper surface of the transmission portion 1230. Optionally, the transmission portion 1230 may further comprise first and second side surfaces that are oriented opposite to each other in the lateral direction (X-axis). The first and second side surfaces may extend in the vertical direction and connect the first and second longitudinal surfaces, respectively.

The first incidence portion 1210 may be formed at the first or rear end of the transmission portion 1230. The first emission portion 1220 may be formed at the second front end of the transmission portion 1230. Optionally, first incidence portion 1210, first emission portion 1220 and the transmission portion 1230 may be formed integrally with each other.

A shield portion 1240 may be formed on the lower surface of the transmission portion 1230 so that a front end 1241 of the shield portion 1240 may be disposed at or in the vicinity of a rear focus F of the first emission portion 1220 to form the cut-off line CL of the low beam pattern P1, as illustrated in FIG. 6.

That is, since the light proceeding toward the first emission portion 1220 through a lower region of the transmission portion 1230 with respect to the rear focus F of the first emission portion 1220 would be refracted and emitted upward and might thus cause glare by being emitted above the cut-off line CL, the front end 1241 of the shield portion 1240 may be configured to be disposed at the rear focus F of the first emission portion 1220 so that the light emitted from the upper light sources 1110 may not proceed to the first emission portion 1220 through the lower region with respect to the rear focus F of the first emission portion 1220.

In addition, the shield portion 1240 may be configured such that a surface between the front end 1241 and a rear end 1242 reflects the light proceeding downward with respect to the rear focus F of the first emission portion 1220 in a front upward direction so that the light is emitted through the first emission portion 1220, thereby reducing light loss potentially caused by light being blocked for formation of the cut-off line CL.

The rear focus F of the first emission portion 1220 may be configured as a point, a line, a surface, a space, or any combinations thereof, depending on the region in which light is collected.

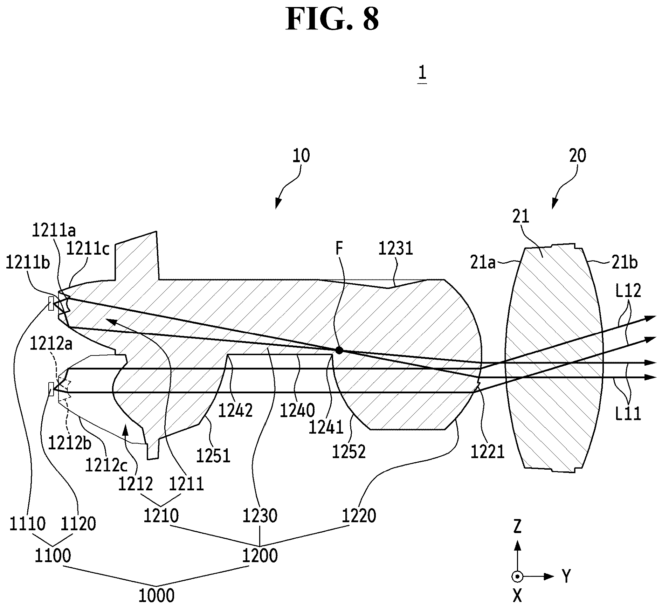

FIG. 8 is a schematic view illustrating an optical path of the vehicle lamp according to an embodiment of the present invention. Referring to FIG. 8, light L11 incident on the at least one upper incidence module 1211 may be collected at or in the vicinity of the rear focus F of the first emission portion 1220 through the space between the upper surface of the transmission portion 1230 and the shield portion 1240, proceeds to the first emission portion 1220, and may form the low beam pattern P1 of FIG. 6.

The transmission portion 1230 may optionally include a transmitting surface 1251 and a re-incidence surface 1252 that face each other in the longitudinal direction. As exemplarily shown in FIG. 8, the transmitting surface 1251 may extend from a first or rear end of the first longitudinal surface (lower surface) of the transmission portion 1230 facing the rear end of the transmission portion. The transmitting surface 1251 may extend transverse to the first longitudinal surface (lower surface), e.g., along the vertical direction. For example, the transmitting surface 1251 may be formed to extend downward from the rear end 1242 of the shield portion 1240. The re-incidence surface 1252 may extend from a second or front end of the first longitudinal surface (lower surface) of the transmission portion 1230 facing the front end of the transmission portion 1230. The re-incidence surface 1252 may extend transverse to the first longitudinal surface (lower surface), e.g., along the vertical direction. re-incidence surface 1252 For example, the re-incidence surface 1252 may be formed to extend downward from the front end 1241 of the shield portion 1240.

Light L12 incident on the at least one lower incidence module 1212 may proceed while passing through the transmitting surface 1251. The light L12 passing through the transmitting surface 1251 may be incident through the re-incidence surface 1252. Accordingly, the light L12 may continue to proceed to the first emission portion 1220 and may form the high beam pattern P2 of FIG. 7.

In this embodiment, the shield portion 1240 is described, by way of example, as being formed along an axis that extends substantially in the longitudinal direction (front-rear direction) and passes through the rear focus F of the first emission portion 1220. In this case, the transmitting surface 1251 and the re-incidence surface 1252 may be arranged spaced apart from each other in the longitudinal direction (front-rear direction) and disposed below the axis that passes through the rear focus F of the first emission portion 1220, thereby allowing the high beam pattern P2 to be formed.

In other words, since the light L12 that passes through the transmitting surface 1251 and incident on the re-incidence surface 1252 proceeds to the first emission portion 1220 through the lower space with respect to the rear focus F of the first emission portion 1220, the light may be refracted in the upward direction when emitted through the first emission portion 1220, and as a result, the high beam pattern P2 at least a portion of which is disposed above the cut-off line CL may be formed, as illustrated in FIG. 7.

As exemplarily shown in FIG. 8, the transmitting surface 1251 may be formed to have a convexly curved surface shape toward the front. Additionally or alternatively, the re-incidence surface 1252 may be formed to have a convexly curved surface shape toward the rear. Thus, the light that proceeds through the transmitting surface 1251 and the re-incidence surface 1252 may be collected and proceed to the first emission portion 1220 with a minimal loss.

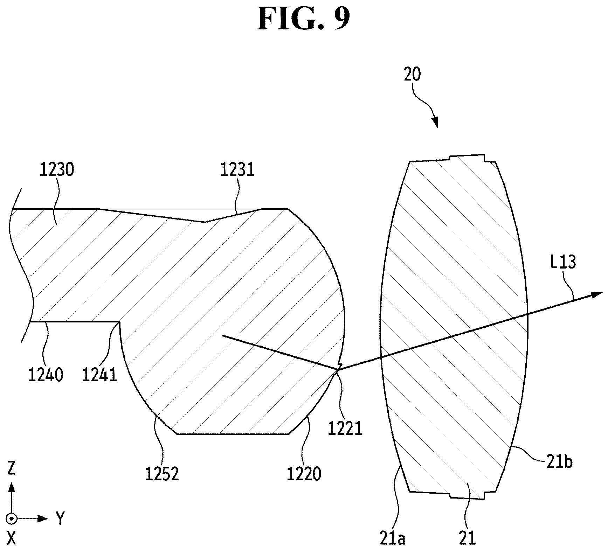

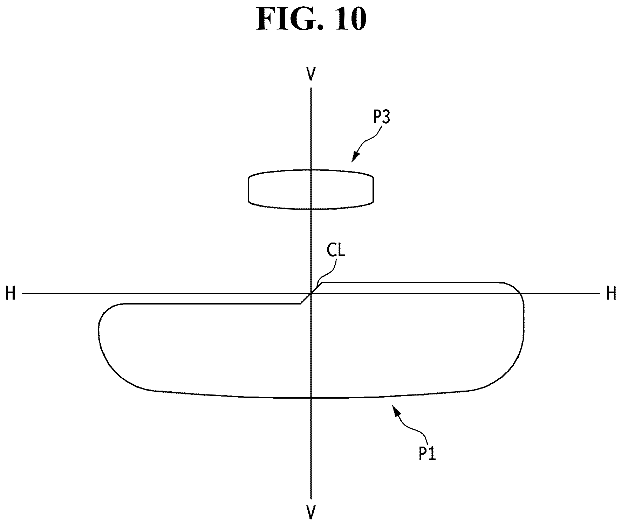

The first emission portion 1220 may include an emission region 1221 for forming a third beam pattern. Optionally, the emission region 1221 may be configured so that a portion of light L13 among the beams of light incident on the first incidence portion 1210 may be refracted and emitted in the upward direction, as illustrated in FIG. 9, thereby forming, as illustrated in FIG. 10, a signal beam pattern P3, which enables easier identification of a road sign or the like disposed above the driver's line of sight, when the low beam pattern P1 is formed. However, this is merely one example for facilitating understanding of the present invention, and the present invention is not limited thereto. The light distribution characteristics of the third beam pattern may vary depending on the formation angle, curvature, and the like of the emission region 1221. As exemplarily shown in FIG. 9, the emission region 1221 may protrude from the convex surface of the first emission portion 1220, e.g., in the form of a wedge shaped protrusion.

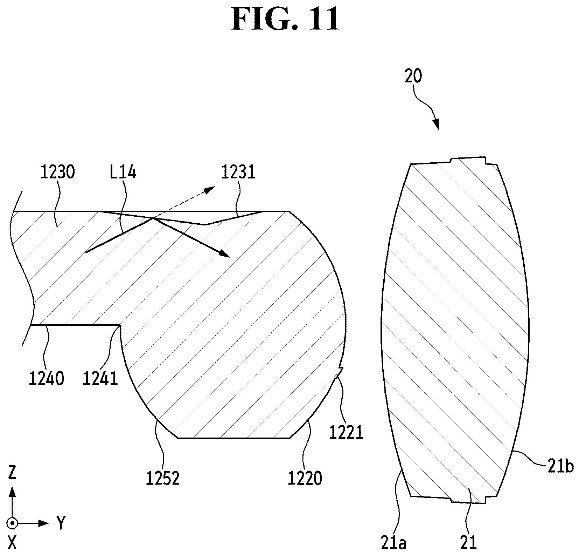

Optionally, a recess 1231 having a concave shape may be formed in the second longitudinal surface (upper surface) of the transmission portion 1230. For example, the recess 1231, when cut in a plane defined by the Y-axis and the Z-axis, may have a triangular cross-section, as exemplarily shown in FIG. 11. As illustrated in FIG. 11, the recess 1231 may obstruct a portion of light L14 among the beams of light incident on the first incidence portion 1210 from proceeding through the upper surface of the transmission portion 1230.

That is, in general, when the vehicle lamp 1 is viewed from the outside, an external viewpoint may likely be above the vehicle lamp 1, and thus glare may be caused by light L14 that potentially passes through the upper surface of the transmission portion 1230. Therefore, in this embodiment, the light L14 may be prevented from proceeding through the upper surface of the transmission portion 1230, due to the recess 1231.

In this case, referring to FIG. 11, the dotted arrow may be understood as indicating the path of the light that may hypothetically pass through the upper surface of the transmission portion 1230 in a case where no recess 1231 is formed.

The optical unit 20 may allow the light emitted from at least one lamp module 1000 to be transmitted therethrough so that a beam pattern suitable for use of the vehicle lamp 1 is formed.

The optical unit 20 may include at least one optical lens 21 corresponding to the at least one lamp module 1000. In this embodiment, the light-emitting unit 10 is described, by way of example, as including a single lamp module 1000, and the optical unit 20 is described, by way of example, as including a single optical lens 21 (hereinafter referred to as a first optical lens).

The first optical lens 21 may include an incidence surface 21a and an emission surface 21b. The incident surface 21b may be arranged facing the first emission portion 1220 in the longitudinal direction. For example, the incidence surface 21a may be formed to have a convexly curved surface shape rearward toward the first emission portion 1220 of the first lamp module 1000, and the emission surface 21b may be formed to have a convexly curved surface shape toward the front.

Optionally, the first emission portion 1220 of the first lamp module 1000 may have, for example, a greater curvature than the incidence surface 21a of the first optical lens 21. This is to allow light emitted from the first lamp module 1000 to be incident on the first optical lens 21 with a minimal loss.

As described above, in the vehicle lamp 1, components for respectively forming the first beam pattern and the second beam pattern, i.e., the first lens unit 1200 and the first optical lens 21, can be commonly used, so that the number of components required for forming different beam patterns is reduced, and thus installation space can be reduced and cost can be reduced.

In this embodiment, the light-emitting unit 10 and the optical unit 20 are described, by way of example, as including a single lamp module 1000 and a single optical lens 21, respectively. However, the present invention is not limited thereto, and the light-emitting unit 10 and the optical unit 20 may include two or more lamp modules and two or more optical lenses, respectively, depending on the light distribution characteristics of a beam pattern to be formed by the vehicle lamp 1.

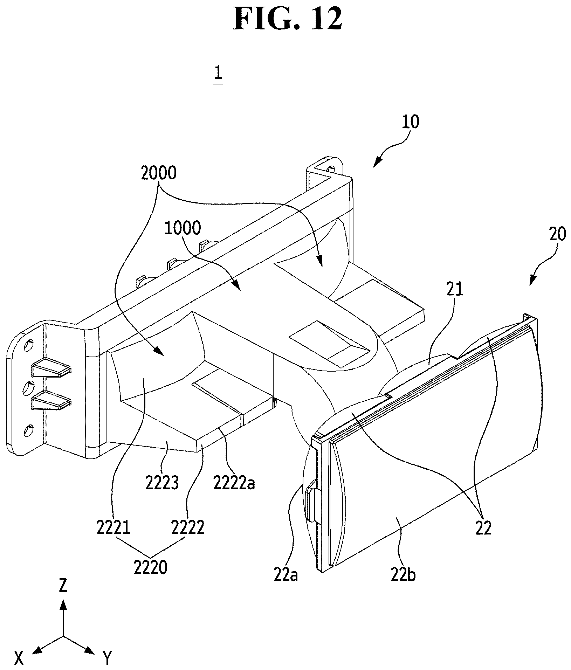

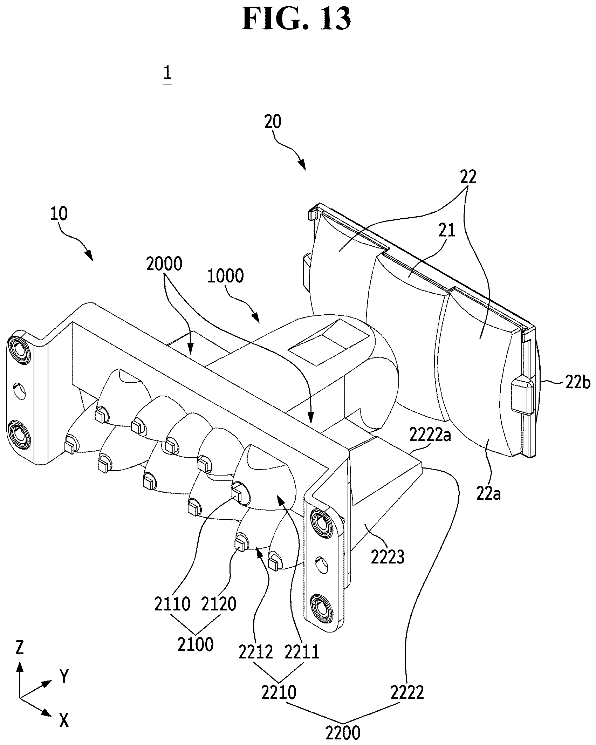

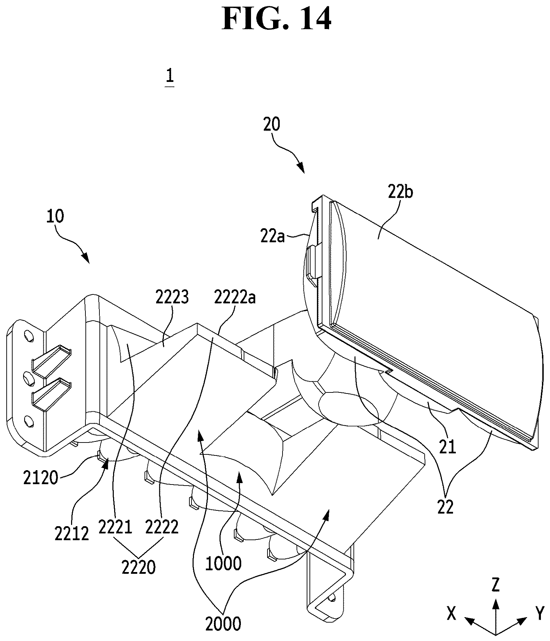

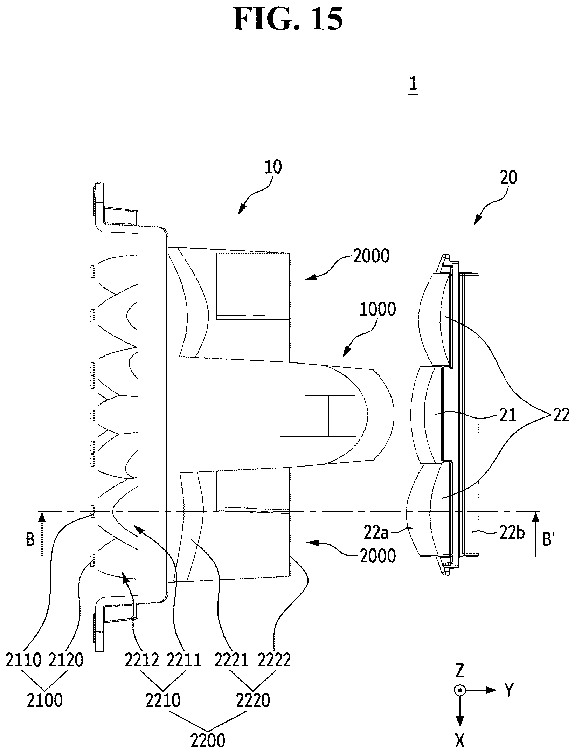

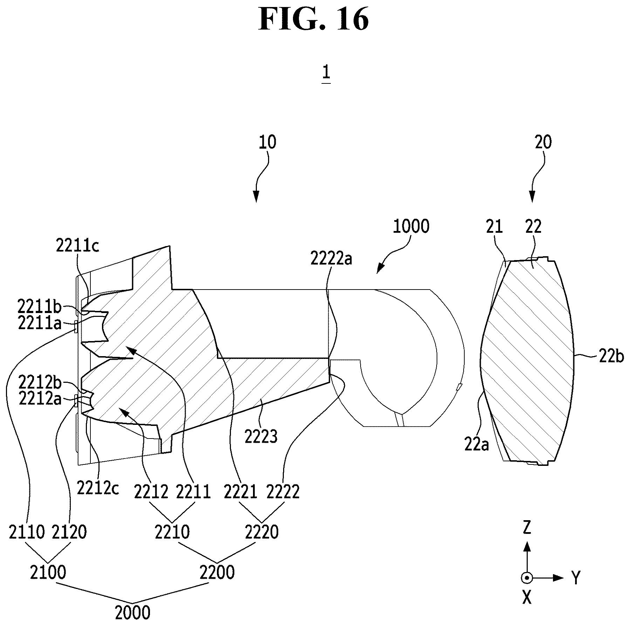

FIGS. 12 to 14 are perspective views illustrating a vehicle lamp according to a further embodiment of the present invention, FIG. 15 is a plan view illustrating the vehicle lamp according to the further embodiment of the present invention, and FIG. 16 is a cross-sectional view taken along line B-B' of FIG. 15.

Referring to FIGS. 12 to 16, a vehicle lamp 1 according to the further embodiment of the present invention, similar to its counterpart of the previous embodiment, may include a light-emitting unit 10 and an optical unit 20.

In this embodiment, the light-emitting unit 10 may include a first lamp module 1000 and one or more second lamp modules 2000 respectively disposed on one or both sides of the first lamp module 1000. The optical unit 20 may include a first optical lens 21 and one or more second optical lenses 22 respectively disposed on one or both sides of the first optical lens 21. Also, in this embodiment, the second lamp modules 2000 are described, by way of example, as lamp modules having light distribution characteristics different from those of the first lamp module 1000, and the second optical lenses 22 are described, by way of example, as optical lenses having optical characteristics, such as the direction or angle in which light is refracted, different from those of the first optical lens 21.

In this case, the first lamp module 1000 and the first optical lens 21 may be understood as corresponding to the first lamp module 1000 and the first optical lens 21, respectively, of the previous embodiment, and detailed descriptions thereof will be omitted.

In addition, in this embodiment, the second lamp modules 2000 are described, by way of example, as being disposed on both sides of the first lamp module 1000 with respect to the lateral direction, and the second optical lenses 22 are described, by way of example, as being disposed on both sides of the first optical lens 21. However, the present invention is not limited thereto, and the second lamp modules 2000 may be disposed on at least one of both sides of the first lamp module 1000, and the second optical lenses 22 may be disposed on at least one of both sides of the first optical lens 21. Further, it may be possible that the second lamp modules 2000 are employed in a vehicle lamp alone, i.e., without the first lamp module 1000, or in combination with other lamp modules configured differently from the first lamp module 1000.

When the second lamp modules 2000 are disposed on both sides of the first lamp module 1000, each of the second lamp modules 2000 may have the same light distribution characteristics or may have different light distribution characteristics from each other. In addition, when the second optical lenses 22 are respectively disposed on both sides of the first optical lens 21, they may have the same optical characteristics or may have different optical characteristics from each other.

In this embodiment, the light-emitting unit 10 may include the first lamp module 1000 and the second lamp modules 2000 to cause pattern regions having different light distribution characteristics, which are respectively formed by the first lamp module 1000 and the second lamp modules 2000, to be synthesized or superposed so that a first beam pattern and a second beam pattern are formed.

For example, in a case where the low beam pattern P1 of FIG. 6 is formed by the vehicle lamp 1, the second lamp modules 2000 may form the high intensity region P11 of the low beam pattern P1, and the first lamp module 1000 may form the spread region P12 of the low beam pattern P1. Accordingly, the low beam pattern P1 may be formed by the high intensity region P11 and the spread region P12 being synthesized.

In addition, similar to the low beam pattern P1 described above, the high beam pattern P2 of FIG. 7 may be formed by the vehicle lamp 1 through synthesis of pattern regions having different light distribution characteristics, which are respectively formed by the first lamp module 1000 and the second lamp modules 2000.

In this embodiment, the first and second beam patterns are described, by way of example, as being formed by synthesizing pattern regions having different light distribution characteristics, which are respectively formed by the first lamp module 1000 and the second lamp modules 2000. However, the present invention is not limited thereto, and at least one of the first or second beam patterns may be formed by superposing pattern regions having the same light distribution characteristics, which are respectively formed by the first lamp module 1000 and the second lamp modules 2000. Generally, the second lamp module 2000 may also combined with another lamp module configured different from the first lamp module 1000 described above, or may be employed alone or along with further second lamp modules 2000 in a vehicle lamp 1.

The second lamp modules 2000 may each include a second light source unit 2100 and a second lens unit 2200. The second light source unit 2100 may include, similar to the first light source unit 1100 described above, one or more first or upper light sources 2110 that emit light for forming the first beam pattern. Additionally or alternatively, the second light source unit 2100 may include one or more second or lower light sources 2120 that emit light for forming the second beam pattern. The numbers and arrangement directions of the upper light sources 2110 and the lower light sources 2120 may vary depending on the light distribution characteristics of a beam pattern to be formed by the vehicle lamp 1.

The second lens unit 2200 may include a second incidence portion 2210 and a second emission portion 2220. Optionally, the second lens unit 2200 may be formed integrally with the first lens unit 1200, and thus, as compared with a case where the first and second lens units 1200 and 2200 are assembled separately, the number of components is reduced to allow an assembly process to be shortened and cost to be reduced.

The second incidence portion 2210 may include at least one first upper incidence module 2211 on which the light emitted from the at least one upper light source 2110 is incident. Additionally or alternatively, the second incidence portion 2210 may include at least one second or lower incidence module 2212 on which the light emitted from the at least one lower light source 2120 is incident.

The at least one upper incidence module 2211 may include at least one of a central surface 2211a, a protruding surface 2211b that protrudes, with respect to the longitudinal direction, rearward, e.g., from an edge of the central surface 2211a, toward the at least one upper light source 2110, and a reflecting surface 2211c that reflects the light incident on the protruding surface 2211b to proceed forward. For example, the central surface 2211a may have a convex curvature. The protruding surface 2211b may, for example, surround the central surface 2211a. Optionally, the protruding surface 2211b may define a conus, as exemplarily shown in FIG. 16. The reflecting surface 2211c may, for example, have a convex curvature.

Similar to the at least one upper incidence module 2211, the at least one lower incidence module 2212 may include at least one of a central surface 2212a, a protruding surface 2212b that protrudes, with respect to the longitudinal direction, rearward, e.g., from an edge of the central surface 2212a, toward the at least one lower light source 2120, and a reflecting surface 2212c that reflects the light incident on the protruding surface 2212b to proceed forward. For example, the central surface 2212a may have a convex curvature. The protruding surface 2212b may, for example, surround the central surface 2212a. Optionally, the protruding surface 2212b may define a conus, as exemplarily shown in FIG. 16. The reflecting surface 2212c may, for example, have a convex curvature.

The at least one upper incidence module 2211 and the at least one lower incidence module 2212 of the second incidence portion 2210, similar to the first incidence portion 1210 of the previous embodiment, may be understood as being of a TIR lens type in order to implement a relatively high degree of light collection.

The second emission portion 2220 may include a first or upper emission portion 2221 and a second or lower emission portion 2222. The upper emission portion 2221 may be formed to have a convexly curved surface shape toward the front. The lower emission portion 2222 may be disposed more forward than the upper emission portion 2221. For example, the lower emission portion 2222 may protrude in the longitudinal direction relative to the upper emission portion 2221. At an upper end of the lower emission portion 2222, an edge portion 2222a that extends in the lateral direction (left-right direction) may be formed. As exemplarily shown in FIG. 16, the edge portion 2222a may be arranged, in the longitudinal direction (front-rear direction) and the vertical direction (up-down direction), at a position that approximately corresponds to the position of a front end 1241 of a first shield portion 1240 as described above, so that a cut-off line CL can be formed at a position approximately the same as that of the first lamp module 1000 in a pattern region formed by the second lamp modules 2000.

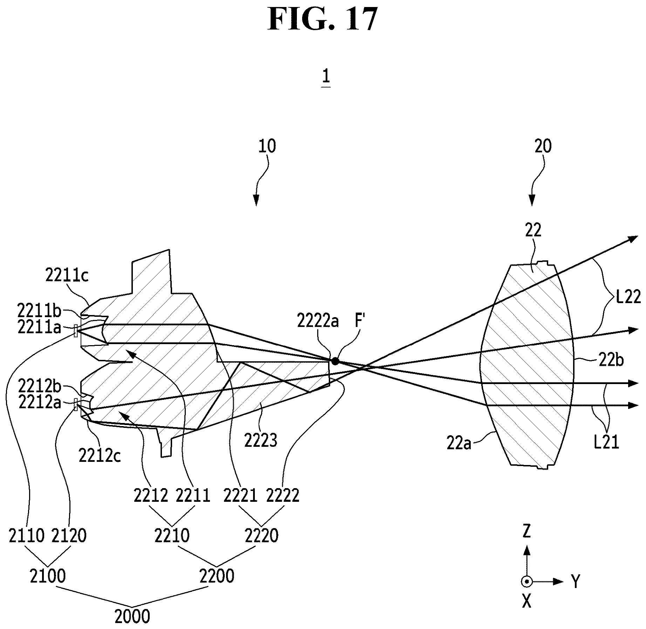

Optionally, the upper emission portion 2221 may be disposed, with respect to the Y-axis direction, behind the first emission portion 1220 of the first lamp module 1000. Further optionally, the path of light may be adjusted such that the light incident on the at least one upper incidence module 2211 is emitted through the upper emission portion 2221 and collected at a focus F' disposed at or in the vicinity of the edge portion 2222a of the lower emission portion 2222 (FIG. 17). Thus, the second lamp modules 2000 can have a relatively high degree of light collection as compared with a case where light is collected by the at least one upper incidence module 2211. Therefore, the second lamp modules 2000 can form a high intensity region P11 with a higher luminous intensity than that of the first lamp module 1000 in the low beam pattern P1.

The front end 1241 of the shield portion 1240 may be formed to have a curved shape such that its central portion is disposed more rearward than its both side portions. In other words, the front end 1241 of the shield portion 1240 may be formed to have a curved shape to be positioned progressively forward as it gets further from a central portion thereof toward both sides. As shown in FIG. 15, the edge portion 2222a of the lower emission portion 2222 may be formed to have a linear shape such that the central portion and both sides thereof have approximately the same position in the longitudinal direction (front-rear direction). This is because the light distribution characteristics of a pattern region formed by the first lamp module 1000 and the light distribution characteristics of a pattern region formed by the second lamp modules 2000 are different from each other. However, the present invention is not limited thereto, and the front end 1241 of the shield portion 1240 and the edge portion 2222a of the lower emission portion 2222 may have the same shape or different shapes depending on the light distribution characteristics required for the first lamp module 1000 and the second lamp modules 2000.

Since the lower emission portion 2222 is formed at a front end of a light guide portion 2223 that is formed to extend forward from the second incidence portion 2210, the light incident on the at least one lower incidence module 2212 may be guided through the light guide portion 2223 to be emitted through the lower emission portion 2222. As exemplarily shown, the light guide portion 2223 may extend in the longitudinal direction between a first or rear end and a front or second end. The lower emission portion 2222 may be formed on the front end of the light guide portion 2223, and the second incidence portion may be formed on the rear end of the light guide portion 2223.

As further exemplarily shown, the light guide portion 2223 may have a first longitudinal surface and a second longitudinal surface being oriented opposite to each other in the vertical direction (Z-axis). The first longitudinal surface, with respect to the vertical direction, may form a lower surface, and the second longitudinal surface may define an upper surface of the light guide portion 2223.

The lower surface of the light guide portion 2223 may be formed to be inclined upward toward the front so that a vertical thickness of the light guide portion 2223 gradually becomes smaller (e.g., thinner) toward the front. This serves to reduce light loss by allowing the light incident through the at least one lower incidence module 2212 to be totally reflected and proceed to the lower emission portion 2222, while allowing a pattern region formed by the light emitted through the lower emission portion 2222 to have an appropriate size and thereby have a sufficient luminous intensity.

In this embodiment, similar to the first optical lens 21 described above, the second optical lenses 22 may each include an incidence surface 22a and an emission surface 22b. The incidence surface 22a may be oriented facing the lower emission portion 2222 and the upper emission portion 2221.

As exemplarily shown in FIG. 16, steps may be formed in the longitudinal direction (front-rear direction) between the incidence surface 21a of the first optical lens 21 and the incidence surfaces 22a of the second optical lenses 22 to cause pattern regions respectively formed by the first lamp module 1000 and the second lamp modules 2000 to have correct positions, that is, to have approximately the same cut-off line CL, even when the positions of the first lamp module 1000 and the second lamp modules 2000 are different from each other. At the same time the emission surface 21b of the first optical lens 21 and the emission surfaces 22b of the second optical lenses 22 may form a single, substantially continuous surface together.

In other words, when the emission surface 21b of the first optical lens 21 and the emission surfaces 22b of the second optical lenses 22 are formed to have steps therebetween, a sense of unity between the first optical lens 21 and the second optical lenses 22 is degraded. In contrast, in this embodiment, since the emission surface 21b of the first optical lens 21 and the emission surfaces 22b of the second optical lenses 22 form a single surface together, the sense of unity is improved, and aesthetic quality can thus be improved.

In this embodiment, steps with a substantially planar shape in the longitudinal direction (front-rear direction) are described, by way of example, as being formed between the incidence surface 21a of the first optical lens 21 and the incident surfaces 22a of the second optical lenses 22. In other words, a vertical plane that faces in one of two opposite directions (left or right) with respect to the lateral direction may be present between the incidence surface 21a of the first optical lens 21 and the incident surfaces 22a of the second optical lenses 22. This may be understood as being for reflecting, among the beams of light incident on the incidence surface 21a of the first optical lens 21 and the incident surfaces 22a of the second optical lenses 22, the light that proceeds toward the emission surfaces of neighboring emission lenses. Accordingly, the light may be prevented from being emitted in an undesired direction.

FIG. 17 is a schematic view illustrating an optical path of the vehicle lamp according to the further embodiment of the present invention. Specifically, FIG. 17 illustrates one example of the optical path of each second lamp module 2000 of the vehicle lamp 1 according to the further embodiment of the present invention.

Referring to FIG. 17, in each second lamp module 2000, light L21 incident on the at least one upper incidence module 2211 may be emitted through the upper emission portion 2221, collected at a focus F' disposed at or in the vicinity of the edge portion 2222a of the lower emission portion 2222, and proceed to the second optical lens 22. Light L22 incident on the at least one lower incidence module 2212 may be guided by the light guide portion 2223 to be emitted through the lower emission portion 2222.

In this case, since the light emitted from the at least one upper light source 2110 can be collected by the at least one upper incidence module 2211 and the upper emission portion 2221, it is preferable that the second lamp modules 2000 form a high intensity region P11 having a relatively high luminous intensity in a low beam pattern P1.

Meanwhile, in this embodiment, the first lamp module 1000 that forms a spread region P12 is described, by way of example, as being disposed in the middle, and the second lamp modules 2000 that form a high intensity region P11 are described, by way of example, as disposed on both sides of the first lamp module 1000. However, the present invention is not limited thereto, and a single second lamp module 2000 that forms a high intensity region P11 may be provided in the middle, and one or more first lamp modules 1000 that form a spread region P12 may be provided on either or both sides of the second lamp module 2000.

As described above, since the vehicle lamp 1 of the present invention can form, with a single lamp module, pattern regions having different light distribution characteristics, the configuration can be simplified and cost can be reduced.

In other words, in the vehicle lamp 1 of the present invention, not only can each of the first and second lens units 1200 and 2200 be commonly used for forming first and second beam patterns, but also each of the first optical lens 21 and the second optical lenses 22 can be commonly used for forming first and second beam patterns. Therefore, the number of components required for forming different beam patterns can be reduced. Thus, installation space and cost can be reduced, and an assembly process can be simplified.

In concluding the detailed description, those skilled in the art will appreciate that many variations and modifications can be made to the exemplary embodiments. Therefore, the disclosed exemplary embodiments are used in a generic and descriptive sense only and not for purposes of limitation.

## Claims

1. A vehicle lamp (1) for forming one or more beam patterns (P1, P2, P3), comprising a light-emitting unit (10) which includes at least one lamp module (1000, 2000), wherein the light-emitting unit (10) includes a first lamp module (1000), which includes:
a first light source unit (1100) configured to generate light; and
a first lens unit (1200) configured to form at least one of a first beam pattern (P1) or a second beam pattern (P2) by the light emitted from the first light source unit (1100),
wherein the first lens unit (1200) includes:
a first incidence portion (1210) on which the light emitted from the first light source unit (1100) is incident;
a first emission portion (1220) through which at least a portion (2222) of the light incident on the first incidence portion (1210) is emitted; and
a transmission portion (1230) through which the light incident on the first incident portion is transmitted toward the first emission portion (1220).

2. The vehicle lamp (1) of claim 1, wherein the first light source unit (1100) includes:
at least one first light source (1110) configured to emit light for forming the first beam pattern (P1); and
at least one second light source (1120) configured to emit light for forming the second beam pattern,
wherein the first incidence portion (1210) includes:
at least one first incidence module (1211) on which the light emitted from the at least one first light source (1110) is incident; and
at least one second incidence module (1212) on which the light emitted from the at least one second light source (1120) is incident.

3. The vehicle lamp (1) of claim 2, wherein the at least one first incidence module (1211) is configured to guide the light incident thereon to proceed to the first emission portion (1220) through the transmission portion (1230), and/or
wherein the at least one second incidence module (1212) is configured to guide the light incident thereon to proceed to the first emission portion (1220) through a transmitting surface (1251) formed on a first longitudinal surface of the transmission portion (1230) and a re-incidence surface (1252) which is arranged opposite and spaced apart from the transmitting surface (1251).

4. The vehicle lamp (1) of claim 3, wherein the transmission portion (1230) includes a shield portion (1240) formed on the first longitudinal surface of the transmission portion (1230) with a front end (1241) thereof disposed in the region of a rear focus (F) of the first emission portion (1220),
wherein the transmitting surface (1251) is connected to a rear end (1242) of the shield portion (1240), and
wherein the re-incidence surface (1252) is connected to the front end (1241) of the shield portion (1240).

5. The vehicle lamp (1) of claim 3 or 4, wherein the transmitting surface (1251) is formed to have a convexly curved surface shape, and/or
wherein the re-incidence surface (1252) is formed to have a convexly curved surface shape.

6. The vehicle lamp (1) of any one of claims 1 to 5, wherein the transmission portion (1230) includes a recess (1231) formed on a second longitudinal surface thereof, and
wherein the recess (1231) is configured to obstruct light from proceeding through the second longitudinal surface of the transmission portion (1230).

7. The vehicle lamp (1) of any one of claims 1 to 6, wherein the first emission portion (1220) includes an emission region (1221) through which light for forming a third beam pattern is emitted among the light incident on the first incidence portion (1210).

8. The vehicle lamp (1) of any one of claims 1 to 7, wherein the light-emitting unit (10) further includes a second lamp module (2000) disposed on at least one of both sides of the first lamp module (1000),
wherein the second lamp module (2000) includes:
a second light source unit (2100) configured to generate light; and
a second lens unit (2200) configured to form at least one of the first beam pattern or the second beam pattern by the light emitted from the second light source unit (2100),
wherein the second lens unit (2200) includes:
a second incidence portion (2210) on which the light emitted from the second light source unit (2100) is incident; and
a second emission portion (2220) through which at least a portion (2222) of the light incident on the second incidence portion (2210) is emitted.

9. The vehicle lamp (1) of claim 8, wherein the second light source unit (2100) includes:
at least one first light source (2110) configured to emit light for forming the first beam pattern; and
at least one second light source (2120) configured to emit light for forming the second beam pattern, and
wherein the second incidence portion (2210) includes:
at least one first incidence module (2211) on which the light emitted from the at least one first light source (2110) is incident; and
at least one second incidence module on which the light emitted from the at least one second light source (2120) is incident.

10. The vehicle lamp (1) of claim 8 or 9, wherein the second emission portion (2220) includes a first emission portion (2221) and a second emission portion (2222), and
wherein the second emission portion (2222) is disposed spaced apart from the first emission portion (2221) in a direction towards first emission portion (1220) of the first lens unit (1200).

11. The vehicle lamp (1) of claim 10, wherein an edge portion (2222a) is formed at an end of the second emission portion (2222) of the second lens unit (2200) lying adjacent to the first emission portion (2221) of the second lens unit (2200), and the edge portion is configured to collect light emitted through the first emission portion (2221) of the second lens unit (2200), thereby forming the first beam pattern (P1), and
wherein light emitted through the second emission portion (2222) of the second lens unit (2200) forms the second beam pattern (P2).

12. The vehicle lamp (1) of claim 10 or 11, wherein the second lens unit (2200) includes a light guide portion (2223) that extends from the second incidence portion (2210), and the second emission portion (2222) of the second lens unit (2200) is formed at an end of the light guide portion (2223) facing away from the second incidence portion (2210), and
wherein the light guide portion (2223) has a first longitudinal surface extending towards the second emission portion (2222) and a second longitudinal surface extending towards the second emission portion (2222), and the first longitudinal surface is formed to be inclined relative to the second longitudinal surface toward the second emission portion (2222) such that a vertical thickness of the light guide portion (2223) becomes smaller toward the second emission portion (2222).

13. The vehicle lamp (1) of any one of claims 10 to 12, wherein the first emission portion (2221) of the second lens unit (2200) is formed to have a convexly curved surface shape.

14. The vehicle lamp (1) of any one of claims 1 to 13, further comprising:
an optical unit (20) disposed opposite to the light-emitting unit (10) to receive light emitted by the light-emitting unit,
wherein the optical unit (20) includes at least one optical lens (21, 22) corresponding to the at least one lamp module (1000, 2000),
wherein the vehicle lamp (1) includes a plurality of lamp modules (1000, 2000), and a plurality of optical lenses (21, 22) respectively corresponding to the plurality of lamp modules (1000, 2000), and
wherein steps are formed between incidence surfaces of adjacent ones of the plurality of optical lenses (22).

15. The vehicle lamp (1) of claim 14, wherein emission surfaces of the plurality of optical lenses (21, 22) form a single, substantially continuous surface.
